# EUROPEAN PATENT SPECIFICATION

(11) **EP 2 127 238 B1**
(45) Date of publication and mention of the grant of the patent: **23.07.2014**
(21) Application number: 06835919.9
(22) Date of filing: 28.12.2006
(51) Int. Cl.: H04L 12/28, H04W 76/02, H04W 88/16, H04L 12/64

(54) **Separating of circuit switched and packet switched traffic**
Trennen von leitungsvermitteltem un packetvermitteltem Verkehr
Séparation du trafic à commutation de circuit (cs) d'avec le trafic à commutation de paquets (ps)

(43) Date of publication of application: 02.12.2009
(73) Proprietor: Telefonaktiebolaget LM Ericsson (publ), 164 83 Stockholm (SE)
(72) Inventor: GOTARE, Christian, S-310 44 Getinge (SE)
(74) Representative: Althoff, Fredrik
(86) International application number: PCT/SE2006/001512
(87) International publication number: WO 2008/082331

(56) References cited:
- EP-A2- 1 191 753
- WO-A1-01/93607
- GB-A- 2 367 206
- US-A1- 2003 039 237
- US-B1- 6 584 098
- US-B1- 6 853 648

## Description

### TECHNICAL FIELD

The present invention relates to a method, nodes, computer program and network for high speed data traffic in a telecommunication network and in particular to a tunneling of data traffic to a central node from a mobile node.

### BACKGROUND OF THE INVENTION

The current mobile stations and future mobile stations are being developed towards a combination of data and voice traffic towards an infrastructure network. This stems from the demand from the customers to be "connected" wherever they are. They want to be able to communicate with coworkers, family, and others with a telephone and also be able to have connection to email, web services, file servers and other similar data applications. However, there is an increasing demand from the users that this should be done from the same mobile station, i.e. the mobile station must be arranged to handle both voice applications and preferably high speed data connections.

The general trend in mobile stations are in this direction and therefore it exists several solutions, for instance for cellular phones with high speed data communication built in using 2G, 2.5G and/or 3G wireless communication for both voice and data, with mobile stations with separated voice and data (e.g. 2G for voice and WLAN (Wireless Local Area Network) for data). In solutions using the same radio interface for data and voice there is a drawback in that the infrastructure needs to handle both data and voice through the same infrastructure devices and thus allocate unnecessary resources and decreasing the possible data traffic rate. Different demands may exist for packet switched data (generally data traffic) and circuit switched data (generally voice traffic).

EP 1 191 753 relates to preferably using CS resources for CS data. PS resources can also be used for the CS data in case the CS resources are busy or due to other reasons. This allows users to utilize conventional CS services when available, thus providing transitional voice quality of service. When additional lines are needed, the system uses PS services to make additional lines available. Thus, a single connection can provide multiple phone lines.

### SUMMARY OF THE INVENTION

It is an object of the present invention to remedy at least some of the problems with the existing technologies and provide a high speed solution for data traffic operating in conjunction with voice traffic

This is provided in a number of aspects, in which a first is presented: a method of communicating in a wireless mobile network environment, comprising the steps of:
- receiving, in a tunnel terminating device, TTD, in a tunnel connection communication information from a mobile station;
- analysing the communication information in the TTD;
- separating circuit switched data from packet switched data in the TTD;
- forwarding circuit switched data from the TTD to a communication infrastructure component arranged to handle circuit switched data; and
- forwarding packet switched data from the TTD to a receiver device arranged to handle packet switched data.
wherein the communication information comprises circuit switched data and packet switched data

The step of forwarding the packet switched data may comprise forwarding the data in a forwarding tunnel. The forwarding tunnel may be set up as a GPRS Tunnel Packet, GTP, tunnel.

The tunnel terminating device may also perform a security solution. The security solution may include at least one of firewall, network address translation and filtering functions.

The tunnel connection may be set up through at least one of a home based network, a public or commercial operator based network.

The tunnel connection may be set up directly with the TTD through a service provider based network or indirectly with the TTD via a public network, e.g. the Internet.

The mobile station may communicate with the infrastructure using at least one of Mobile@Home, WiMAX, or MowLAN standards.

Another aspect of the present invention, a communication infrastructure device is provided comprising at least one communication interface and a processing unit - characterised in that the communication interface is arranged to receive communication information in a tunnel connection and the device further comprises means to analyse the communication information, means to separate CS data from PS data and means to communicate the CS data to a CS data receiving infrastructure components and DS data to a DS data receiving device, wherein the communication information comprises circuit switched data and packet switched data.

The device may further comprise a security solution, which may comprise at least one of a firewall, network address translation, and filtering functions.

Yet another aspect of the present invention, a mobile communication unit comprising at least one wireless communication interface and at least one processing unit arranged to pack circuit, CS, and packet, PS, switched data into a mutual connection tunnel packet addressed to a tunnel terminating device, the data being packed so as to allow for separation in the tunnel terminating device between CS and PS traffic.

The communication interface may be arranged to operate using at least one of Mobile@Home, WiMAX, or MowLAN communication protocols.

Yet another aspect of the present invention, an infrastructure telecommunication wireless network is provided, comprising at least one tunnel terminating device arranged to operate the method described above.

Still another aspect of the present invention, a computer program is provided for communicating with a mobile communication unit, comprising instructions sets for:
- receiving, in a tunnel terminating device, TTD, in a tunnel connection communication information from a mobile station;
- analysing the communication information in the TTD;
- separating circuit switched data from packet switched data in the TTD;
- forwarding circuit switched data from the TTD to appropriate communication infrastructure component; and
- forwarding packet switched data from the TTD to appropriate receiver.
wherein the communication information comprises circuit switched data and packet switched data

With the solutions as provided by the present invention it is possible to provide high speed packet based communication access to network using existing telecommunications network infrastructure with minor adjustments at low cost and it is possible to migrate existing technologies to include this high speed access as well.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically a general network topology according to the present invention;
Fig. 2 illustrates an embodiment of an infrastructure component according to the present invention;
Fig. 3 illustrates an embodiment of a mobile station according to the present invention;
Fig. 4 illustrates an embodiment of a network topology according to the present invention;
Fig. 5 illustrates another embodiment of a network topology according to the present invention;
Fig. 6 illustrates another embodiment of a network topology according to the present invention;
Fig. 7 illustrates another embodiment of a network topology according to the present invention;
Fig. 8 illustrates another embodiment of a network topology according to the present invention;

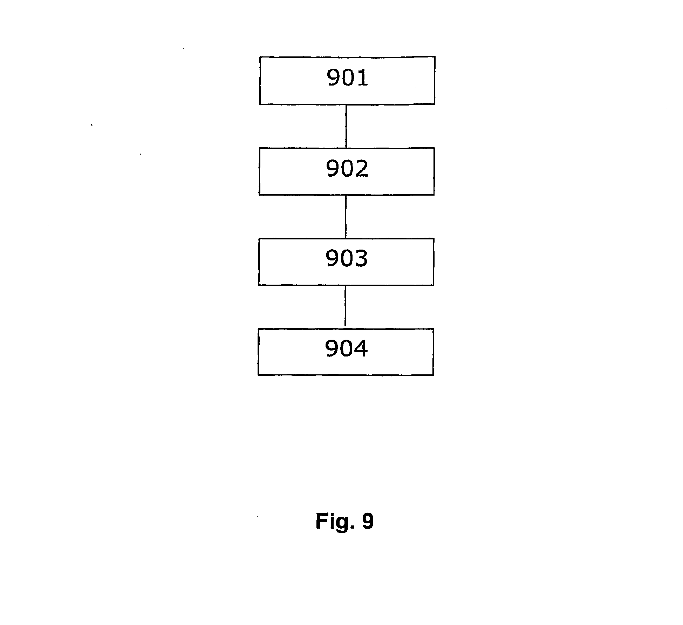

Fig. 9 illustrates a method according to the present invention;

### DETAILED DESCRIPTION OF PREFERRED EMBODIMENTS

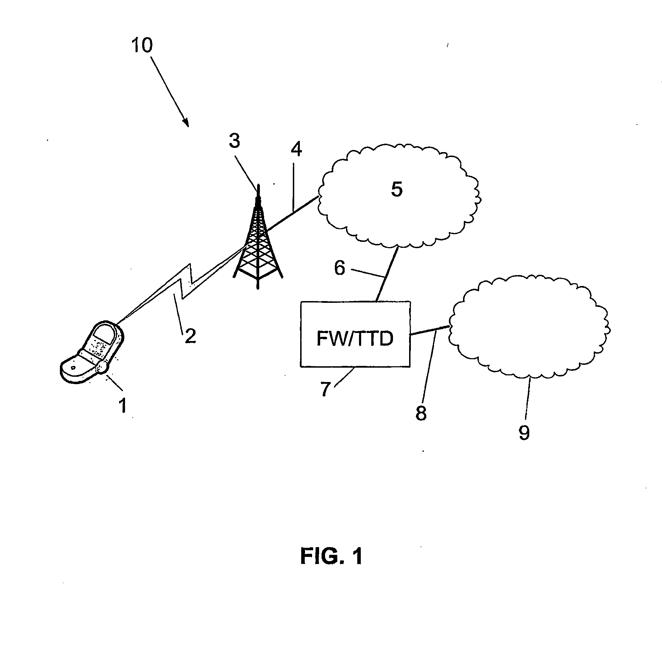

In Fig. 1, reference numeral 1 generally denotes a mobile station MS communicating wirelessly 2 with a gateway 3 to a communication network 10. The communication network comprises apart from the gateway 3, communication channels 4, 6, and 8, a communication infrastructure 5, tunnel terminating device TTD 7 and further communication infrastructure 9. Depending on the communication interface and protocol applied, the communication infrastructures 5, 9 will look differently. A number of examples will be shown below; however, the person skilled in the art should appreciate that these do not limit the invention to these examples. The mobile station MS 1, often referred to as a mobile node (MN), for instance a cell phone or laptop or some other user equipment (UE) communicates with the gateway 3 through some wireless interface 2, e.g. GPRS, UMTS, WCDMA, WLAN, WPAN, Mobile@Home, WiMAX, MowLAN, or similar interface compatible with packet based communication protocols. The tunnel terminating device may also perform different types of security solutions, such as but not limited to, firewall (FW), network address translation, and filtering functions (including e.g. application filtering, content filtering (parent control or similar), address filtering, service provider filtering, or other network filtering functions).

WLAN includes all wireless local area network protocols, for instance IEEE 802.11, 802.15, 802.16 based protocols, and WPAN include wireless personal area networks, e.g. Bluetooth or similar protocols.

The operation of the present invention is as follows: both circuit switched and packets switched data information are packed into tunnel packets in the mobile station 1 and sent directly to the FW/TTD 7 (similar to a Tunnel Terminating Gateway, TTG) via the appropriate infrastructure network components depending on the communication interface and protocol. The tunnel is mutual for CS and PS traffic. At the FW/TTD 7 the tunnel packets are opened for examination and a policy based routing is performed separating CS (Circuit Switched) and PS (Packet Switched) information traffic. CS information relate generally to speech traffic for instance as in GSM or GPRS protocols. PS information traffic generally relates to data traffic for instance email, HTML, FTP or similar IP based information. However, it should be understood that other protocols may be applicable within the PS channel, e.g. UDP (User Datagram Protocol) or ATM (Asynchronous Transfer Mode) based traffic protocols. The policy based routing may be coupled to information content in the data packets and/or information regarding the user or the type of business arrangement between the user and the service provider/operator; this may include service level, bandwidth paid for, services subscribed to, priority, operator, or similar business related agreements.

Traffic originating from the mobile station is sent through an IPSec based tunnel to the FW/TTD which in turn relays the traffic to appropriate channels depending on type of information. The method according to the present invention will be discussed in more detail below in this document. It should be noted that with the term IPSec is not meant any special IP security protocol but any suitable secure tunnel protocol operating in an IP environment may be used.

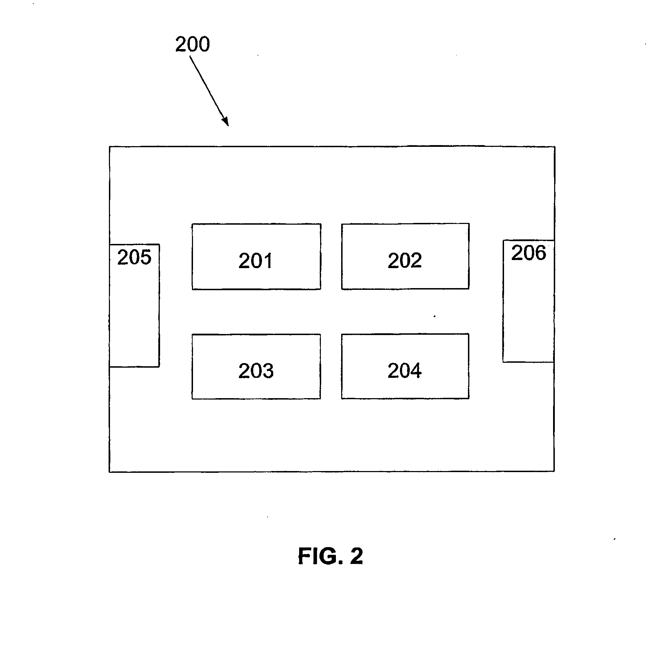

Fig. 2 illustrates an infrastructure device operating as FW/TTD. This infrastructure device 200 comprises a processing unit 201 that handles control over communication packets. The device 200 may further comprise a memory unit or units, volatile 202 and/or non-volatile 203, for storing control software, statistics, updates, and so on as understood by the person skilled in the art. The memory units may comprise any suitable type including but not limited to: RAM, SRAM (Static RAM) or DRAM (Dynamic RAM) (e.g. DIMM RAM versions, RDRAM, Rambus), diskette, CD-ROM (Compact Disk-Read Only Memory), DVD (Digital Video Disk), flash or similar memory media (e.g. compactflash, SD secure digital, memorystick, miniSD, MMC multimediacard, smartmedia, transflash, XD), HD-DVD (High Definition DVD), or Bluray DVD, USB (Universal Serial Bus) based memory media, magnetic tape media, optical storage media, magneto-optical media, bubble memory. The infrastructure device 200 may further comprise an interface unit for interfacing with a user or operator during installation, maintenance, or operation of the device. The device 200 may further comprise two communication interfaces (which can be using the same physical interface) 205, 206: one for communication towards a mobile station and one towards other infrastructure network devices. The infrastructure device 200 is arranged to receive data packets from the mobile station and separate CS and PS packets and redirect these to appropriate channels depending on network topology.

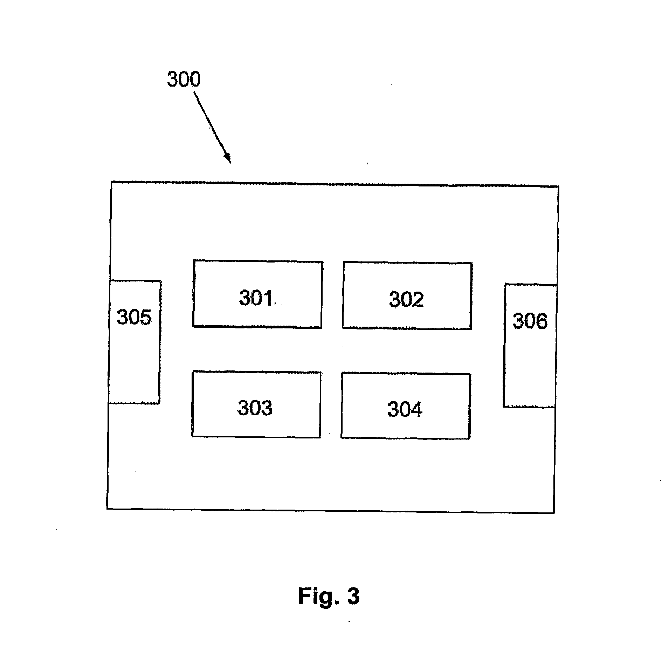

Fig. 3 shows a mobile station operating in a network enabled according to the present invention. The mobile station 300 comprises a processing unit 301 for handling communication operations, user interface commands, and internal control data between different units in the mobile station 300. Also, the mobile station may comprise one or several memory units 302, 303 of volatile and/or non-volatile type as understood by the person skilled in the art (see for instance at least parts of list exemplified for the infrastructure device 200 as shown above). The mobile station 300 may further comprise at least one communication interface 305 and a user interface 306. The station 300 may also comprise a unique identification interface 304 such as for instance for receiving a SIM card (not shown). This unique identification may be used for authentication, authorization and accounting (AAA) purposes.

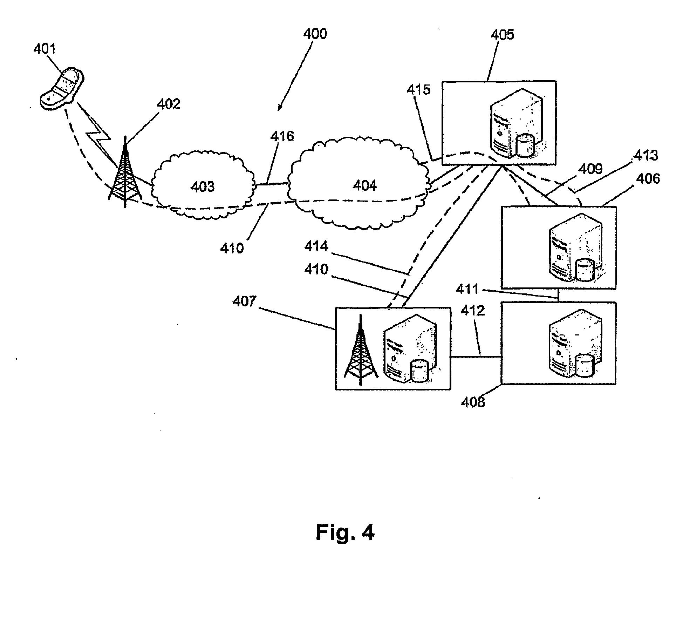

Fig. 4 illustrates one embodiment of a network topology and communication setup according to the present invention. The mobile station 401 connects to an access point (AP) 402 located on a local network 403 (which may comprise for instance a router, firewall and/or modem, these are not shown since they are understood by the person skilled in the art) in turn connected through some broadband access connection 416 to an external network (e.g. the Internet) 404. The FW/TTD 405 discussed earlier is in turn also connected to the same external network 404. Traffic coming from the mobile station 401 is transferred in an IPsec tunnel 410 to the FW/TTD 405 (e.g. a signalling gateway (SGw) in 3GPP networks). The FW/TTD is arranged to analyze the traffic coming from the mobile station 401 and separate different types of information depending on type using a policy based routing method. For PS traffic a GGSN (Gateway GPRS Support Node) is set as default gateway and traffic is rerouted to this GGSN 406 in a GTP tunnel 413 on a communication line 409. The GGSN 406 in turn will reroute the PS traffic to a suitable APN (Access Point Name) on a Gi interface (raw IP) 415. CS traffic is rerouted from the FW/TTD to a BSC (Base Station Controller) 407 in an Abis interface 414 on a communication line 410. The BSC may for instance be a Home BSC (HBSC) 407. The BSC 407 is connected 412 to an SGSN (Serving GPRS Support Node) 408 which in turn has a connection 411 to the GGSN 406.

The Access point 402 that the mobile station 401 connects to may belong to the users own home network 403, to a visited and operator owned network, or any other suitable network that accepts connection for the mobile station 401 and for which there is a connection to the FW/TTD 405 directly or indirectly.

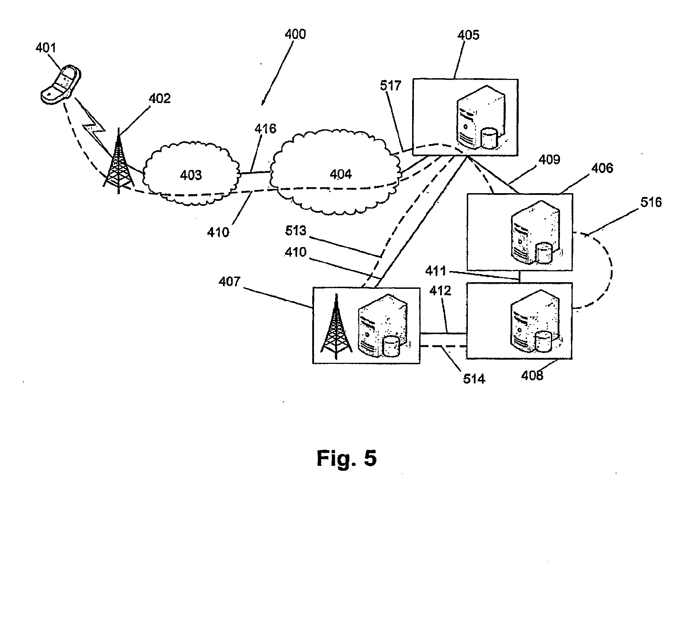

Fig. 5 illustrates a network topology according to another embodiment of the present invention wherein the network to begin with is configured as a Mobile@Home network but migrates to a MowLAN network. The network shown in Fig. 5 is a Mobile@Home network topology. Similar reference numerals indicate similar entities as was discussed in relation to Fig. 4. Traffic from the mobile station 401 is tunnelled 410 to a tunnel terminating device 405. However, in this case all traffic is forwarded to a HBSC (Home Base Station Controller) 407on an Abis interface 513 and the HBSC forwards all traffic to a SGSN 408 on a Gb interface 514. The SGSN 408 is responsible for handling PS traffic which is transferred on a GTP interface 516 to a GGSN 406 which in turn communicates the traffic via the FW/TTD 405 on a Gi (raw IP) interface 517. This solution can easily be migrated to the a solution according to the present invention by combining the Mobile@Home solution with a MowLAN solution and the network topology will then be as shown in relation to Fig. 4.

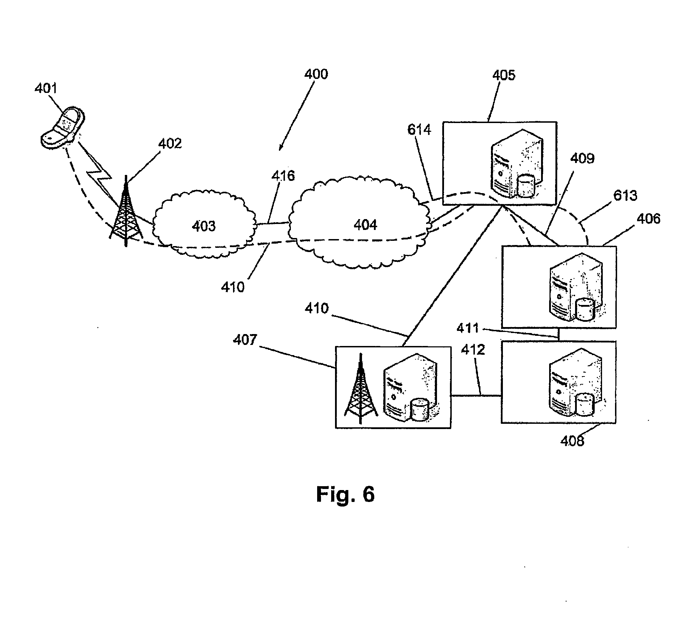

Fig. 6 illustrates a network topology according to another embodiment of the present invention wherein the network to begin with is a MowLAN network but migrates to a Mobile@Home network. Similar reference numerals indicate similar entities as was discussed in relation to Fig. 4. Traffic from the mobile station 401 is tunnelled 410 to a tunnel terminating device 405. However, in this case all/PS traffic is forwarded to a GGSN 406 on a GTP interface 613 and the GGSN forwards the PS traffic back to the Internet 404 using a Gi interface 614. This solution can easily be migrated to the a solution according to the present invention by combining the MowLAN solution with a Mobile@Home solution and the network topology will then be as shown in relation to Fig. 4.

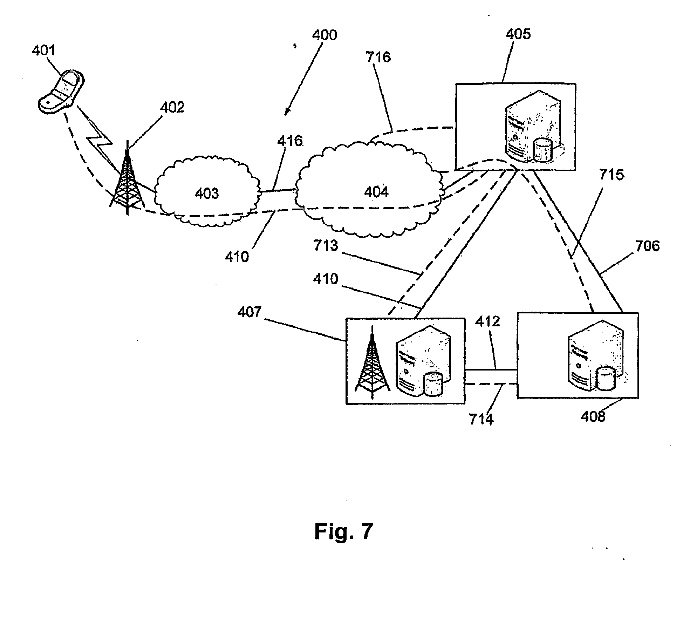

Fig. 7 illustrates a network topology according to another embodiment of the present invention wherein the network is a SGSN termination solution network. Communication traffic from the mobile station 401 is transferred via a tunnel connection 410 to a FW/TTD 405 which forwards CS traffic to the HBSC 407 on an Abis interface 713. The HBSC in turn forwards CS traffic to the SGSN 408 on a Gb interface 412. The SGSN routes CS traffic back to the network 404 on a Gi interface 715. The FW/TTD routes PS traffic to the network 404 also on a Gi interface 716.

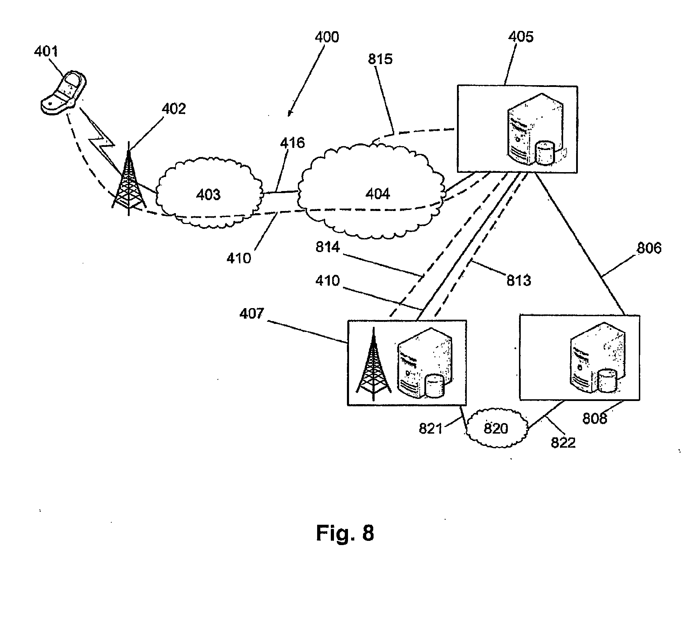

Fig. 8 illustrates a network topology according to another embodiment of the present invention wherein the network has a separated user and control plane on a GSN solution. Traffic from the mobile station 401 is routed in an IPSec tunnel to the FW/TTD 405 which extracts the CS traffic part and forwards this to the HBSC 407 on an Abis interface 813. The HBSC 407 in turn sends traffic (CS) back to the FW/TTD on a Gb interface 814. PS traffic is routed directly from the FW/TTD 405 to the network 404 on a Gi interface 815.

The present invention may be operated in its core application as a program code executed in a processing unit (201) as instruction sets stored in a memory (202, 203) performing the following method steps:
901. Receiving traffic information data in a secure tunnel from a mobile station in the FW/TTD.
902. Extracting the traffic data and separating CS and PS traffic.
903. Forwarding CS traffic to suitable communication network device.
904. Forwarding PS traffic to suitable network application device.
905. Optionally handling billing issues in suitable device or devices, e.g. the FW/TTD. This can be done using suitable FBC/AWARE solutions.

AAA functions (Authentication, Authorization and Accounting) may operate according to standard communication protocols or they may at least in part be implemented in the FW/TTD. For instance based on policy decision functions at least some AAA functions are advantageously performed in the FW/TTD.

The present invention allow for easy migration from different standard network configurations allowing operators and/or network providers to enhance the network utilization and optimize the performance for the customers without affecting network service negatively during setup of the solution according to the present invention. The invention provides one combined solution for tunnel termination and switching systems. Infrastructure devices may be better utilized since they may double or triple their usage, e.g. the same equipment may be used for TT, IDP/IDS and FW. It can later be scaled towards a layered architecture on GSN. Support CS replacement, i.e. it can support both a central and a distributed solution of PS termination/handling. The solution solves a Mobile@Home problem which may be found in relation to 3GPP TS 24.008 packetization of the PS part of the Mobile system. It will enhance the bandwidth experience for the users since it will reduce the bottleneck (HBSC/SGSN) in the 3GPP UMA solution.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that at least parts of the invention may be implemented at least in part by means of both hardware and software, and that several "means", "units" and "devices" may be represented by the same item of hardware.

The above mentioned and described embodiments are only given as examples and should not be seen to be limiting to the present invention. Other solutions, uses, objectives, and functions within the scope of the invention as claimed in the below described patent claims should be apparent for the person skilled in the art.

### DEFINITIONS

- AAA: Authentication, Authorization and Accounting
- APN: Access Point Name
- ATM: Asynchronous Transfer Mode
- BGP: Border Gateway Protocol
- BGw: Billing Gateway
- CAS: Customer Administration System
- CS: Circuit Switched
- CDS: Common Directory System
- CGSN: Combined GSN
- CLI: Command Line Interface
- CN: Core Network
- DIP: Dynamic IP
- DMZ: DeMilitarized Zone
- DNS: Domain Name System
- E-AAA: Ericsson AAA
- EMA: Ericsson Multi-Activation
- ESRP: Extreme Standby Router Protocol
- FE: Fast Ethernet
- FPC: Flexible PICs Concentrator
- FVS: Forwarding Virtual Server
- FW: Firewall
- GE: Gigabit Ethernet
- GGSN: Gateway GPRS Support Node
- GGSN-VIP: GGSN Virtual IP address (same as GTP VIP)
- GPRS: General Packet Radio Service
- GRD: Generic Routing Domain
- GRE: L2 Tunnel Protocol
- GRX: GPRS Roaming Exchange
- GSM: Global System for Mobile Communication
- GSN: GPRS Support Node
- GTP: GPRS Tunneling Protocol
- HA: High Availability
- HE-VASP: Home Environment Value Added Service Provider
- HLR: Home Location Register
- HTTP: Hypertext Transfer Protocol
- IBR: Inband RADIUS
- iLB: internal Load Balancer
- Inet: Internet
- IPI: IP Infrastructure
- IPMP: IP MultiPathing
- IPsec: IP Security
- ISDN: Integrated Services Digital Network
- ISP: Internet Service Provider
- L2/L3: Layer 2/ Layer 3
- LB: Load Balancer
- LDAP: Lightweight Directory Access Protocol
- MAC: Medium Access Control
- MIB: Management Information Base
- MIEP: Mobile Internet Enabler Proxy
- MIP: Mapped IP
- MMC: Multi-Media Center
- MMS: Multi-Media Service
- MS: Mobile Station
- MSC: Mobile Services Switching Center
- MTA: Mail Transfer Agent
- NAT: Network Address Translation
- NOC: Network Operation Center
- OBR: Outband RADIUS
- OGw: Online Mediation Gateway
- OOB: Out of Band
- &M: O Operations & Maintenance
- OSN: Optimization Server Node
- OSPF: Open Shortest Path First (Routing)
- PAT: Port Address Translation
- PBN: Packet Backbone Network
- PIU: Plug-In-Unit
- PM: Provisioning Manager
- PLMN: Public Land Mobile Network
- Pol: Point of Interconnection
- PP: Product Package
- PS: Packet Switched
- PSTN: Public Switched Telephone Network
- PVC: Permanent Virtual Circuit
- RADIUS: Remote Authentication Dial In User Service
- RNC: Radio Network Controller
- SAPI: Server Access and Protection Infrastructure
- SCR: (or SCM) Service Configuration Registry, also called Service Configuration Manager
- SF: Server Farm
- SGW: Signaling Gateway
- SLB: Server Load Balancer
- SMS-CShort: Message Service Center
- SMTP: Simple Mail Transfer Protocol
- SN: Service Network
- SN-IPI: Service Network IP Infrastructure
- SNMP: Simple Network Management Protocol
- SNOC: Service Network Operation and Maintenance Center
- SNOS: Service Network Operation and Maintenance System
- SOS: Service Ordering System
- STM: Synchronous Transfer Mode
- STP: Signaling Transfer Point
- STP: Spanning Tree Protocol
- SVS: Standard Virtual Server
- SW: Switch
- SD: Security Domain
- SR: Site Router
- SZ: Security Zone
- TCP: Transport Control Protocol
- TPS: Transactions per seconds
- TSC: Transit Switching Center
- TSP: Telecom Server Platform
- UDP: User Datagram Protocol
- UMTS: Universal Mobile Telecommunication System
- USIS: User Session and Identity Server
- VIP: Virtual IP
- VLAN: Virtual LAN
- VPN: Virtual Private Network
- VR: Virtual Router
- VRF: VPN Routing and Forwarding Table
- VRRP: Virtual Router Redundancy Protocol
- WAP: Wireless Application Protocol
- WCDMA: Wideband Code Division Multiple Access
- WLAN: Wireless Local Area Network (e.g. IEEE 802.11, 802.15, 802.16 series of protocols)
- WPAN: Wireless Personal Area Network (e.g. Bluetooth)

## Claims

1. A method of communicating in a wireless mobile network (10) environment, comprising the steps of:
- receiving, in a tunnel terminating device, TTD, (7, 200, 405) in a tunnel connection (410) communication information from a mobile station (1, 300, 401);
- analysing the communication information in the TTD (7, 200, 405);
- separating circuit switched data from packet switched data in the TTD (7, 200, 405);
- forwarding circuit switched data from the TTD (7, 200, 405) to a communication infrastructure component arranged to handle circuit switched data; and
- forwarding packet switched data from the TTD (7, 200, 405) to a receiver device arranged to handle packet switched data,
wherein the communication information comprises circuit switched data and packet switched data.

2. The method according to claim 1, wherein the step of forwarding the packet switched data comprises forwarding the data in a forwarding tunnel.

3. The method according to claim 2, wherein the forwarding tunnel is set up as a GPRS Tunnel Packet, GTP, tunnel.

4. The method according to claims 1 or 2, wherein the tunnel terminating device (7, 200, 405) performs a security solution.

5. The method according to claim 4, wherein the security solution includes at least one of firewall, network address translation and filtering functions.

6. The method according to any of the preceding claims, wherein the tunnel connection (410) is set up through at least one of a home based network, a public or commercial operator based network.

7. The method according to any of the preceding claims, wherein the tunnel connection (410) is set up directly with the TTD (7, 200, 405) through a service provider based network.

8. The method according to any of the preceding claims, wherein the tunnel connection (410) is set up indirectly with the TTD (7, 200, 405) via a publicly available network.

9. The method according to any of claims 1 to 8, wherein the communication between the mobile station (1, 300, 401) and the infrastructure is with at least one of Mobile@Home, WiMAX, MowLAN, and IEEE 802.11, IEEE 802.15, IEEE 802.16 standards.

10. A communication infrastructure device (7, 405) comprising at least one communication interface and a processing unit, **characterised in that** the communication interface is arranged to receive communication information in a tunnel connection (410), and the device (7, 405) further comprises means to analyse the communication information, means to separate Circuit Switched, CS, data from Packet Switched, PS, data and means to communicate the CS data to a CS data receiving infrastructure components and PS data to a PS data receiving device, wherein the communication information comprises CS data and PS data.

11. The device (7, 405) according to claim 10, further comprising a security solution.

12. The device (7, 405) according to claim 11, wherein the security solution comprises at least one of a firewall, network address translation, and filtering functions.

13. A mobile communication unit (1, 300, 401) comprising at least one wireless communication interface (305) and at least one processing unit (301) arranged to pack circuit, CS, and packet, PS, switched data into a connection tunnel packet addressed to a tunnel terminating device (7, 200, 405), the data being packed so as to allow for separation in the tunnel terminating device (7, 200, 405) between CS and PS traffic.

14. The mobile communication unit (1, 300, 401) according to claim 13, wherein the communication interface (305) is arranged to operate using at least one of Mobile@Home, WiMAX, or MowLAN communication protocols.

15. The mobile communication unit (1, 300, 401) according to claim 13, wherein the communication interface (305) is arranged to operate using at least one of WLAN or WPAN communication protocols.

16. An infrastructure telecommunication wireless network (10), comprising at least one tunnel terminating device (7, 200, 405) arranged to operate the method according to claim 1.

17. A computer program for communicating with a mobile communication unit, comprising instructions sets for:
- receiving, in a tunnel terminating device, TTD, (7, 200, 405) in a tunnel connection (410), communication information from a mobile station (1, 300, 401);
- analysing the communication information in the TTD (7, 200, 405);
- separating circuit switched data from packet switched data in the TTD (7, 200, 405);
- forwarding circuit switched data from the TTD (7, 200, 405) to appropriate communication infrastructure component; and
- forwarding packet switched data from the TTD (7, 200, 405) to appropriate receiver, wherein the communication information comprises circuit switched data and packet switched data.

## Patentansprüche

1. Verfahren zum Kommunizieren in der Umgebung eines drahtlosen Mobilnetzes (10), folgende Schritte umfassend:
- Empfangen von Kommunikationsinformation von einer Mobilstation (1, 300, 401) in einer Tunnelabschlusseinrichtung, TTD, (7, 200, 405) in einer Tunnelverbindung (410);
- Analysieren der Kommunikationsinformation in der TTD (7, 200, 405);
- Trennen der leitungsvermittelten Daten von paketvermittelten Daten in der TTD (7, 200, 405);
- Weiterleiten von leitungsvermittelten Daten von der TTD (7, 200, 405) an eine Kommunikations-Infrastrukturkomponente, die zum Handhaben von leitungsvermittelten Daten angeordnet ist; und
- Weiterleiten von paketvermittelten Daten von der TTD (7, 200, 405) an eine Empfängereinrichtung, die zum Handhaben von paketvermittelten Daten angeordnet ist,
worin die Kommunikationsinformation leitungsvermittelte Daten und paketvermittelte Daten umfasst.

2. Verfahren nach Anspruch 1, worin der Schritt des Weiterleitens der paketvermittelten Daten das Weiterleiten der Daten in einem Weiterleitungstunnel umfasst.

3. Verfahren nach Anspruch 2, worin der Weiterleitungstunnel als ein GTP(GPRS-Tunnelpaket)-Tunnel eingerichtet ist.

4. Verfahren nach Anspruch 1 oder 2, worin die Tunnelabschlusseinrichtung (7, 200, 405) eine Sicherheitslösung ausführt.

5. Verfahren nach Anspruch 4, worin die Sicherheitslösung mindestens eins von Folgenden einschließt: Firewall, Netzadressübersetzung und Filterfunktionen.

6. Verfahren nach einem der vorhergehenden Ansprüche, worin die Tunnelverbindung (410) durch mindestens eins von Folgenden eingerichtet wird: ein heimbasiertes Netz, ein öffentliches oder kommerzielles betreiberbasiertes Netz.

7. Verfahren nach einem der vorhergehenden Ansprüche, worin die Tunnelverbindung (410) direkt mit der TTD (7, 200, 405) durch ein dienstbetreiberbasiertes Netz eingerichtet wird.

8. Verfahren nach einem der vorhergehenden Ansprüche, worin die Tunnelverbindung (410) indirekt mit der TTD (7, 200, 405) über ein öffentlich verfügbares Netz eingerichtet wird.

9. Verfahren nach einem der Ansprüche 1 bis 8, worin die Kommunikation zwischen der Mobilstation (1, 300, 401) und der Infrastruktur mit mindestens einem von Folgenden funktioniert: Mobile@Home-, WiMAX-, MowLAN-, und IEEE 802.11-, IEEE 802.15-, IEEE 802.16-Standards.

10. Kommunikations-Infrastruktureinrichtung (7, 405), mindestens eine Kommunikationsschnittstelle und eine Verarbeitungseinheit umfassend, **dadurch gekennzeichnet, dass** die Kommunikationsschnittstelle dazu angeordnet ist, Kommunikationsinformation in einer Tunnelverbindung (410) zu empfangen, und die Einrichtung (7, 405) außerdem Folgendes umfasst: Mittel zum Analysieren der Kommunikationsinformation, Mittel zum Trennen der CS(leitungsvermittelten)-Daten von PS(paketvermittelten)-Daten und Mittel zum Kommunizieren der CS-Daten an eine CS-Daten empfangende Infrastrukturkomponente und der PS-Daten an eine PS-Daten empfangende Einrichtung, worin die Kommunikationsinformation CS-Daten und PS-Daten umfasst.

11. Einrichtung (7, 405) nach Anspruch 10, außerdem eine Sicherheitslösung umfassend.

12. Einrichtung (7, 405) nach Anspruch 11, worin die Sicherheitslösung mindestens eins von Folgenden umfasst: Firewall, Netzadressübersetzung und Filterfunktionen.

13. Mobile Kommunikationseinheit (1, 300, 401), mindestens eine drahtlose Kommunikationsschnittstelle (305) und mindestens eine Verarbeitungseinheit (301) umfassend, angeordnet zum Packen von CS(leitungsvermittelten)- und PS(paketvermittelten)-Daten in ein Verbindungstunnelpaket, das an eine Tunnelabschlusseinrichtung (7, 200, 405) adressiert ist, wobei die Daten so gepackt sind, dass in der Tunnelabschlusseinrichtung, TTD, (7, 200, 405) die Trennung zwischen CS-und PS-Verkehr ermöglicht wird.

14. Mobile Kommunikationseinheit (1, 300, 401) nach Anspruch 13, worin die Kommunikationsschnittstelle (305) dazu angeordnet ist, unter Verwendung von mindestens einem von Folgenden zu funktionieren: Mobile@Home-, WiMAX- oder MowLAN-Kommunikationsprotokolle.

15. Mobile Kommunikationseinheit (1, 300, 401) nach Anspruch 13, worin die Kommunikationsschnittstelle (305) dazu angeordnet ist, unter Verwendung von mindestens einem von Folgenden zu funktionieren: WLAN- oder WPAN-Kommunikationsprotokolle.

16. Drahtloses Infrastruktur-Telekommunikationsnetz (10), mindestens eine Tunnelabschlusseinrichtung (7, 200, 405) umfassend, die dazu angeordnet ist, das Verfahren nach Anspruch 1 zu betreiben.

17. Computerprogramm zum Kommunizieren mit einer mobilen Kommunikationseinheit, die Anweisungssätze umfasst zum:
- Empfangen von Kommunikationsinformation von einer Mobilstation (1, 300, 401) in einer Tunnelabschlusseinrichtung, TTD, (7, 200, 405) in einer Tunnelverbindung (410);
- Analysieren der Kommunikationsinformation in der TTD (7, 200, 405);
- Trennen der leitungsvermittelten Daten von paketvermittelten Daten in der TTD (7, 200, 405);
- Weiterleiten von leitungsvermittelten Daten von der TTD (7, 200, 405) an eine geeignete Kommunikations-Infrastrukturkomponente; und
- Weiterleiten von paketvermittelten Daten von der TTD (7, 200, 405) an einen geeigneten Empfänger,
worin die Kommunikationsinformation leitungsvermittelte Daten und paketvermittelte Daten umfasst.

## Revendications

1. Procédé de communication dans un environnement de réseau mobile sans fil (10), comprenant les étapes ci-dessous consistant à :
- recevoir, au sein d'un dispositif de terminaison de tunnel, TTD, (7, 200, 405) dans une connexion de tunnel (410), des informations de communication en provenance d'une station mobile (1, 300, 401) ;
- analyser les informations de communication au sein du dispositif TTD (7, 200, 405) ;
- séparer les données à commutation de circuit des données à commutation de paquets au sein du dispositif TTD (7, 200, 405) ;
- transmettre les données à commutation de circuit, du dispositif TTD (7, 200, 405) à un composant d'infrastructure de communication agencé de manière à traiter les données à commutation de circuit ; et
- transmettre les données à commutation de paquets, du dispositif TTD (7, 200, 405) à un dispositif récepteur agencé de manière à traiter les données à commutation de paquets ;
dans lequel les informations de communication comportent des données à commutation de circuit et des données à commutation de paquets.

2. Procédé selon la revendication 1, dans lequel l'étape consistant à transmettre les données à commutation de paquets consiste à transmettre les données dans un tunnel d'acheminement.

3. Procédé selon la revendication 2, dans lequel le tunnel d'acheminement est établi en tant que tunnel de protocole de tunnellisation GPRS, GTP.

4. Procédé selon la revendication 1 ou 2, dans lequel le dispositif de terminaison de tunnel (7, 200, 405) met en oeuvre une solution de sécurité.

5. Procédé selon la revendication 4, dans lequel la solution de sécurité inclut au moins l'une parmi des fonctions de pare-feu, des fonctions de traduction d'adresses réseau et des fonctions de filtrage.

6. Procédé selon l'une quelconque des revendications précédentes, dans lequel la connexion de tunnel (410) est établie à travers au moins l'un parmi un réseau à domicile et un réseau basé sur un opérateur commercial ou public.

7. Procédé selon l'une quelconque des revendications précédentes, dans lequel la connexion de tunnel (410) est établie directement avec le dispositif TTD (7, 200, 405) à travers un réseau basé sur un fournisseur de services.

8. Procédé selon l'une quelconque des revendications précédentes, dans lequel la connexion de tunnel (410) est établie indirectement avec le dispositif TTD (7, 200, 405) par l'intermédiaire d'un réseau accessible au public.

9. Procédé selon l'une quelconque des revendications 1 à 8, dans lequel la communication entre la station mobile (1, 300, 401) et l'infrastructure repose au moins sur l'une parmi les normes Mobile@Home, WiMAX, MowLAN, et IEEE 802.11, IEEE 802.15., IEEE 802.16.

10. Dispositif d'infrastructure de communication (7, 405) comprenant au moins une interface de communication et une unité de traitement, **caractérisé en ce que** l'interface de communication est agencée de manière à recevoir des informations de communication dans une connexion de tunnel (410), et **en ce que** le dispositif (7, 405) comporte en outre des moyens pour analyser les informations de communication, des moyens pour séparer les données à commutation de circuit CS des données à commutation de paquets PS, et des moyens pour communiquer les données à commutation CS à un composant d'infrastructure de réception de données à commutation CS, et pour communiquer les données à commutation PS à un dispositif de réception de données à commutation PS, dans lequel les informations de communication comportent des données à commutation CS et des données à commutation PS.

11. Dispositif (7, 405) selon la revendication 10, comprenant en outre une solution de sécurité.

12. Dispositif (7, 405) selon la revendication 11, dans lequel la solution de sécurité comprend au moins l'une parmi des fonctions de pare-feu, des fonctions de traduction d'adresses réseau, et des fonctions de filtrage.

13. Unité de communication mobile (1, 300, 401) comprenant au moins une interface de communication sans fil (305) et au moins une unité de traitement (301) agencée de manière à empaqueter des données à commutation de circuit, CS, et des données à commutation de paquets, PS, dans un paquet de tunnel de connexion adressé à un dispositif de terminaison de tunnel (7, 200, 405), les données étant empaquetées de manière à permettre la séparation, dans le dispositif de terminaison de tunnel (7, 200, 405), entre le trafic à commutation CS et le trafic à commutation PS.

14. Unité de communication mobile (1, 300, 401) selon la revendication 13, dans laquelle l'interface de communication (305) est agencée de manière à fonctionner en utilisant au moins l'un parmi les protocoles de communication Mobile@Home, WiMAX, ou MowLAN.

15. Unité de communication mobile (1, 300, 401) selon la revendication 13, dans laquelle l'interface de communication (305) est agencée de manière à fonctionner en utilisant au moins l'un parmi les protocoles de communication WLAN ou WPAN.

16. Réseau sans fil de télécommunication d'infrastructure (10), comprenant au moins un dispositif de terminaison de tunnel (7, 200, 405) agencé de manière à mettre en oeuvre le procédé selon la revendication 1.

17. Programme informatique pour communiquer avec une unité de communication mobile, comprenant des jeux d'instructions pour :
- recevoir, au sein d'un dispositif de terminaison de tunnel, TTD, (7, 200, 405) dans une connexion de tunnel (410), des informations de communication en provenance d'une station mobile (1, 300, 401) ;
- analyser les informations de communication au sein du dispositif TTD (7, 200, 405) ;
- séparer les données à commutation de circuit des données à commutation de paquets au sein du dispositif TTD (7, 200, 405) ;
- transmettre les données à commutation de circuit, du dispositif TTD (7, 200, 405) à un composant d'infrastructure de communication approprié ; et
- transmettre les données à commutation de paquets, du dispositif TTD (7, 200, 405) à un récepteur approprié ;
dans lequel les informations de communication comportent des données à commutation de circuit et des données à commutation de paquets.
